# EUROPEAN PATENT SPECIFICATION

(11) **EP 0 667 566 B1**
(45) Date of publication and mention of the grant of the patent: **08.11.2000**
(21) Application number: 95201071.8
(22) Date of filing: 24.08.1990
(51) Int. Cl.: A63F 13/02, G06F 3/033

(54) **Portable graphic computer apparatus**
Tragbarer graphischer Rechner
Ordinateur graphique portable

(30) Priority: 25.08.1989 JP 21981289; 25.08.1989 JP 21981389; 25.08.1989 JP 21981489
(43) Date of publication of application: 16.08.1995
(62) Divisional of application: 90309327.6
(73) Proprietor: SONY CORPORATION, Tokyo (JP)
(72) Inventor: Yasuhara, Nae, c/o Intellectual Property Div., Shinagawa-ku, Tokyo 141 (JP); Marusawa, Miyuki, c/o Intellectual Property Div., Shinagawa-ku, Tokyo 141 (JP); Kashii, Masaharu, c/o Intellectual Property Div., Shinagawa-ku, Tokyo 141 (JP); Wada, Jo, c/o Intellectual Property Div., Shinagawa-ku, Tokyo 141 (JP)
(74) Representative: Cotter, Ivan John

(56) References cited:
- EP-A- 0 261 495
- GB-A- 2 141 907
- REVIEW OF THE ELECTRICAL COMMUNICATION LABORATORIES, vol. 36,no. 4, July 1988 TOKYO, JP, pages 411-417, TAKAHASI ET AL 'A New Overhead Projecting System Using a 400x600 Pixel Active-Matrix LCD'

## Description

This invention relates to portable graphic computer apparatus.

To create a picture, children customarily draw the picture on drawing paper with crayons and/or coloured pencils, whereby a mistake in the picture cannot easily be corrected. Also, there is a restriction on the extent to which children can freely express their ideas by drawing pictures in this way because the number of sheets of drawing paper available will generally be restricted.

Therefore, an image forming apparatus has been proposed in which a tablet having, for example, a coordinates detecting means or apparatus, a personal computer having software for processing inputted coordinates, and a television monitor for displaying a video signal generated by the personal computer, are combined to display a locus drawn on the tablet on a picture screen of the television monitor. In this case, the picture displayed on the monitor can be corrected with ease, and the user can draw pictures freely over and over.

An electronic picture drawing apparatus is disclosed, for example, in US Patent No. US-A-4 764 763. In this picture drawing apparatus, coordinates are inputted by moving a cursor on a display panel by turning right and left knobs. (Accordingly, the fundamental idea of this apparatus is different from that of embodiments of the present invention described in detail hereinbelow.)

However, since the tablet having the coordinates detecting means and the personal computer having the predetermined software are independently provided as described above, the overall arrangement of the apparatus becomes large in size and the interconnection thereof becomes complicated. This results in the disadvantage that children cannot use the apparatus with ease.

Furthermore, in order to realise the above-mentioned portable graphic computer apparatus in actual practice, the colours of, for example, a picture displayed on the picture screen of the television monitor must be changed between a group of, for example, 10 different colours, and various functions such as an eraser function and the like must additionally be provided. This results in a need for many more operation buttons for designating colours and functions. If mechanical switch buttons are increased in this way, the mechanical portion thereof becomes complicated in arrangement and the manufacturing cost is increased.

Moreover, since electronic, relatively expensive image forming apparatus is utilised, it is desirable that other more sophisticated functions than that of drawing also be provided.

Review of the Electrical Communications Laboratories, vol. 36, No. 4, July 1988, Tokyo, JP, pages 411-417, Takahashi et al, "A New Overhead Projection System Using a 400x600 Pixel Active-Matrix LCD" discloses a LCD panel for use with an overhead projector and having an associated tablet for inputting coordinate data disposed over the LCD panel.

GB-A-2141907 discloses a graphic electronic device in which demonstration image data is periodically displayed when the device is not used for playing a game or also when a game is being played.

Various different aspects of the invention are set forth in the appended claims.

Preferred embodiments of the invention described in detail below provided an improved portable graphic computer apparatus which can eliminate or at least reduce at least some of the above-mentioned shortcomings and disadvantages encountered with the prior art. More specifically, substantially the entire apparatus (with the possible exception of the display means) is accommodated within a cabinet and is simplified so that the apparatus is highly suited to being used by children. Also, the mechanical construction can be simplified in arrangement and other functions can be extended additionally. Further, if, as in one embodiment, the display means is mounted on the cabinet, the overall arrangement can be even more simplified, and a coordinate entry portion and a video image display portion can be provided close to each other, thus making the apparatus more useful.

Other advantageous features of the preferred embodiments are that: an alarm sound is generated so that the user is warned not to inadvertently leave a power switch of the apparatus in its ON state; demonstration video data is formed after a predetermined period of time so that the apparatus is suitable for being exhibited in a shop for demonstration purposes; a tracing sheet can be provided on the tablet with ease; and the tracing sheet can be used by children to perform a kind of learning process so that use of the apparatus is not limited to drawing pictures.

The invention will now be further described, by way of illustrative and nonlimiting example, with reference to the accompanying drawings, in which like references identify the same or similar parts throughout, and in which:
Figure 1 is a perspective view illustrating the system arrangement of a portable graphic computer apparatus according to an embodiment of the invention;
Figure 2 is a plan view of a portable graphic computer embodying the invention, for use in the apparatus of Figure 1;
Figures 3 and 4 are respective exploded perspective views of the portable graphic computer;
Figure 5 is a block circuit diagram of the portable graphic computer;
Figures 6A, 6B and 7 to 10 are schematic diagrams used to explain operation of the embodiment; and
Figures 11 and 12 are perspective views of respective further embodiments of the invention.

A description will now be given, with reference to the accompanying drawings, of preferred embodiments of the invention each in the form of a portable graphic computer or portable graphic computer apparatus which can be used by children to draw pictures.

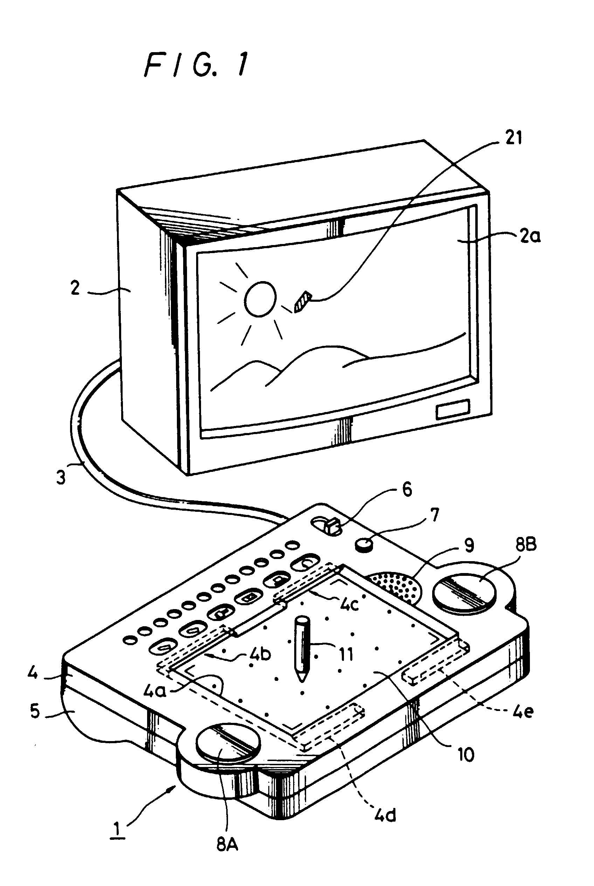

Figure 1 shows the overall system arrangement of a portable graphic computer apparatus according to a first embodiment. The apparatus comprises a portable graphic computer 1 and a monitor 2 having a video signal input terminal. A video signal output terminal (described below) of the graphic computer 1 and the video signal input terminal of the monitor 2 are coupled via a video cable 3. A cabinet of the graphic computer 1 is formed of an upper casing 4 and a lower casing 5. A power switch 6, a clear button 7, and a sound emanating portion 9 which covers a speaker are provided on a right end portion of the upper casing 4, and executing buttons 8A and 8B are provided on two side end portions of the upper casing 4. The power switch 6, clear button 7 and executing buttons 8A, 8B are respective independent mechanical switches.

A rectangular cut-away or recessed portion 4a is formed through a centre portion of the upper casing 4, and a tablet 10 is provided beneath the cut-away portion 4a to act as a coordinate input surface of a pressure sensitive type position sensing means or apparatus. Slots 4b, 4c, 4d and 4e are formed through the cut-away portion 4a at portions where the cut-away portion 4a contacts the tablet 10, as shown in Figure 1. As described below, the slots 4b to 4e can be used to attach a tracing sheet to the tablet 10.

The general operation of the apparatus will now be described. When a user draws a locus on the tablet 10 by lightly touching the tablet with an attachment or accessory pen 11 made of a plastics material, or with a fingertip or the like, while pushing the executing button 8A or 8B, a pen-shaped cursor 21 is displayed on a picture screen 2a of the monitor 2, and the cursor 21 moves in tandem with the locus of the pen, fingertip or the like to display the locus as an image. Accordingly, the cursor 21 is displayed only during a period in which the user touches the tablet 10 with the accessory pen 11 or fingertip. (A respective executing button 8A, 8B is provided at each side of the tablet 10 so that both left-handed and right-handed children can operate the graphic computer 1 with ease.) Further, if the clear button 7 is depressed, the video image on the picture screen 2a will be erased completely and the graphic computer 1 stands by in a picture drawing mode.

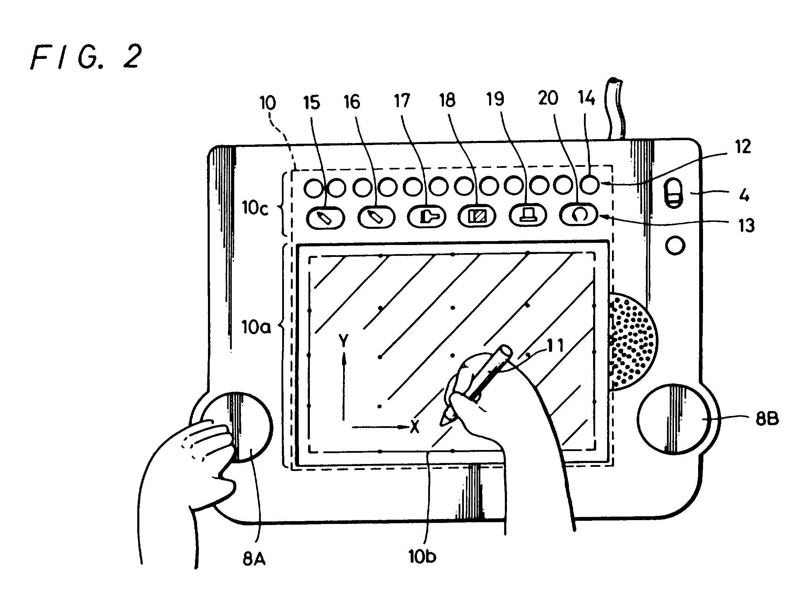

The coordinate input surface of the tablet 10 is, as shown in Figure 2, divided into a picture-drawing area 10a and a menu selecting area 10c, and a portion (hatched area in Figure 2) of the picture-drawing area 10a encircled by a bracket and represented by solid circles at a predetermined pitch forms a picture-making area 10b. The aspect ratio of the picture-making area 10b is made coincident with the aspect ratio (3:4) of the picture screen of a standard monitor. A pixel ratio that is a ratio between resolution in the longitudinal direction (Y-direction) and resolution in the lateral direction (X-direction) of the input coordinates of the tablet 10 is made coincident with the ratio of pixels of the standard monitor. Therefore, in this embodiment, there is the advantage that, if the user draws a locus of a circle on the picture-making area 10b precisely, a picture of a circle is also accurately displayed on the picture screen 2a of the monitor 2.

The menu selecting area 10c of the tablet 10 is divided to provide a colour selecting area 12 and a tool selecting area 13. The upper casing 4 has twelve round bores or openings 14 at the colour selecting area 12, and six openings or slots 15 to 20 at the tool selecting area 13. If the user lightly touches the tablet 10 through one of the twelve round openings 14 with the attachment pen 11 or the like, a respective one of twelve colours (black/blue/green/yellow/red/white etc.) will be designated. If the user lightly touches the tablet 10 through one of the six slots 15 to 20, then a respective one of five kinds of tool (fine line, bold line, brush, eraser, stamp) and a cancel function will be designated. The one of the twelve round openings 14 and six slots 15 to 20 that has been selected can be discriminated on the basis of the input coordinates to the tablet 10.

As described above, according to this embodiment, colour, tool and cancel functions are identified on the basis of input coordinates, and thus the mechanical construction can be simplified. Further, there is the advantage that various other functions can additionally be provided simply by sub-dividing or extending the menu selecting area 10c.

For convenience of explanation, the twelve round openings 14 will be referred to hereinafter as colour selecting buttons 14 and the six slots 15 to 20 will be referred to hereinafter as the fine line button 15, the bold line button 16, the brush button 17, the eraser button 18, the stamp button 19 and the cancel button 20, respectively. (Also, the colour selecting buttons 14 and the tool selecting buttons 15 to 20 will be collectively referred to hereinafter as the menu selecting buttons.) The functions of the buttons 15 to 20 are as follows:
1 fine line button 15... to draw a free curve as a fine line of 2 x 2 dots;
2 bold line button 16... to draw a free curve by 6 x 6 columnar dots;
3 brush button 17... to cause the cursor 21 within the picture screen 2a of the monitor 2 to be shaped as a brush to paint out (fill in) a closed area in a designated colour;
4 eraser button 18... to cause the cursor 21 within the picture screen 2a of the monitor 2 to be shaped as an eraser to erase a drawn figure;
5 stamp button 19... to form a video image of a pattern, selected from 28 kinds of stamps each formed of 16 x 16 dots, at a desired position; and
6 cancel button 20... to return to the picture of just one procedure before. (One procedure means a process which is finished during depression of the executing button 8A or 8B.)

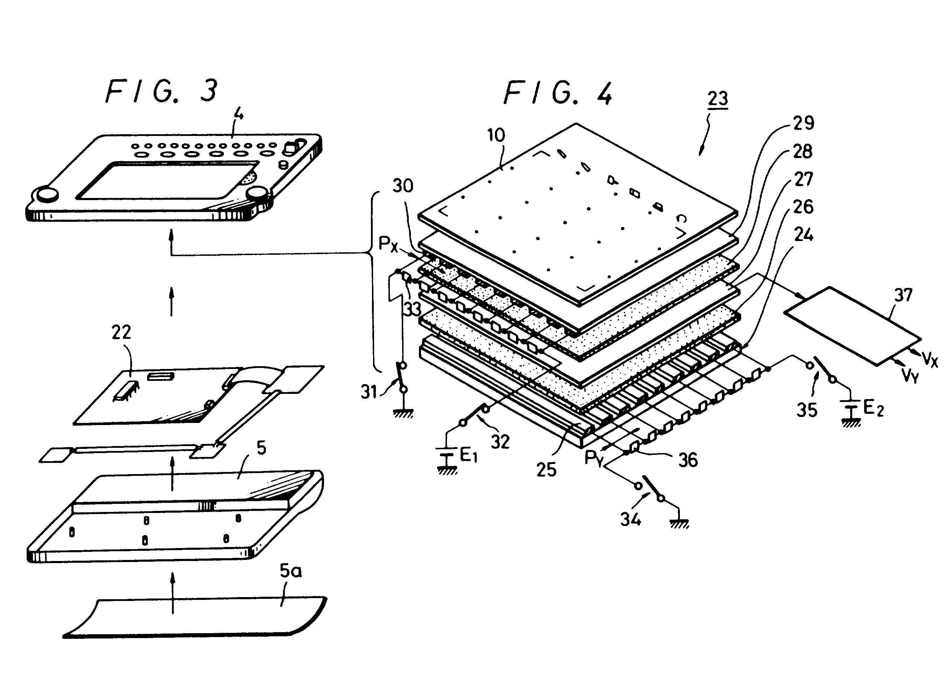

The interior structure of the graphic computer 1 shown by way of example in Figures 1 and 2 is represented in Figures 3 and 4 (the scale of Figure 4 being enlarged with respect to Figure 3). The upper and lower casings 4 and 5 have sandwiched therebetween a pressure sensitive position sensing means or apparatus 23 including the tablet 10 and a printed circuit board 22. The lower casing 5 accommodates therein a battery cell or a rechargeable battery as a power source; and is provided with a battery cover 5a. The graphic computer 1 of this embodiment may be driven by an AC power source adapter or the like.

The arrangement of the pressure sensitive position sensing means 23 will now be described with reference to Figure 4. Referring to Figure 4, thin strip electrodes 25 are formed on a first insulating substrate 24 at a pitch Py, and a first pressure sensitive conductive sheet 26 made of pressure sensitive conductive rubber, a conductive plate 27, a second pressure sensitive conductive sheet 28 made of pressure sensitive conductive rubber, and a second insulating substrate 29 having thin strip electrodes 30 formed on a bottom surface thereof at a pitch Px, are sequentially laminated on the first insulating substrate 24. The tablet 10 is mounted on the second insulating substrate 29. The conductive plate 27, second insulating substrate 29 and the tablet 10 are all flexible. The pitch Px assumes resolution in the X-direction of the input coordinates of this embodiment, and the pitch Py assumes resolution in the Y-direction thereof. The ratio Px/Py is made to be the same as the pixel ratio of the minimum pixels of a picture screen of a standard monitor. The values of the pitches or resolutions Px and Py are, for example, about 0.3 mm.

The thin strip electrode 30 at one end or side in the lateral direction of the second insulating substrate 29 is earthed (grounded) through a switch circuit 31, while the thin strip electrode 30 at the other end or side is connected to a DC voltage source having a voltage E1 through a switch circuit 32. The thin strip electrodes 30 are connected sequentially by resistors 33 having the same resistance value. Similarly, the thin strip electrode 25 at one end or side in the longitudinal direction of the second insulating substrate 24 is earthed (grounded) through a switch circuit 34, while the thin strip electrode 25 at the other end or side is connected to a DC voltage source having a voltage E2 through a switch circuit 35. The thin strip electrodes 25 are connected sequentially by resistors 36 having the same resistance value.

When the user pushes (applies pressure to) the tablet 10 at a particular position, the pressure sensitive conductive sheets 26 and 28 are conductively connected at that position. Thus, when the pair of switch circuits 31 and 32 are closed the conductive plate 27 derives a voltage corresponding to the coordinate in the X-direction, whereas when the pair of switch circuits 34 and 35 are closed the conductive plate 27 derives a voltage corresponding to the coordinate in the Y-direction. When the pair of switch circuits 31, 32 or the pair of switch circuits 34, 35 are alternately closed and the voltages generated at the conductive plate 27 are held, a coordinate detecting section 37 generates voltages (VX, Vy) corresponding to the input coordinates (X, Y) of the tablet 10.

A more detailed description of the pressure sensitive position sensing means 23 shown in the example of Figure 4 and a description of a modified form thereof are set out in Japanese Patent Application Publication No. JP-A-58-90235. (It should be noted, however, that the coordinate detecting means or device employed in apparatus embodying the invention is not limited to the pressure sensitive type.)

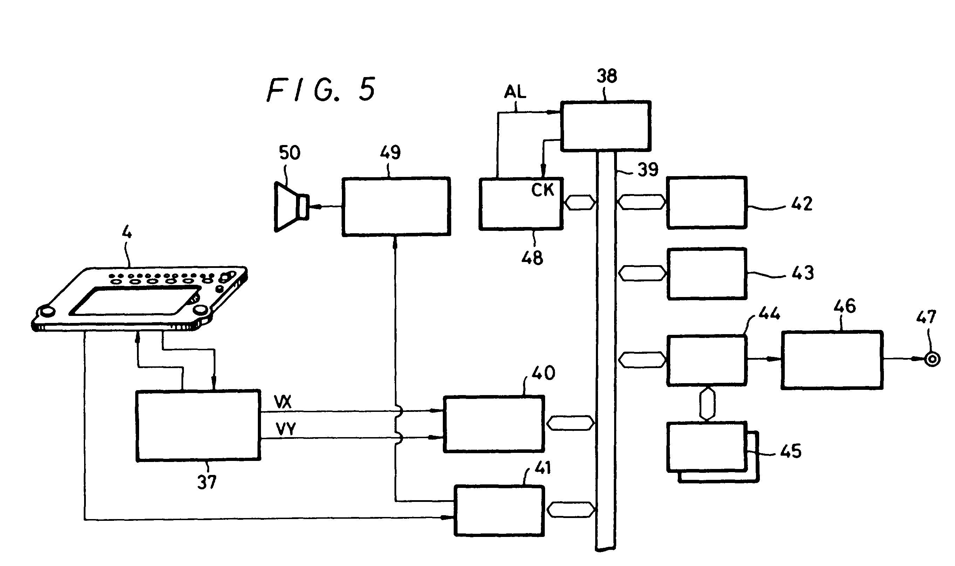

Figure 5 shows the circuit arrangement of the graphic computer 1 of this embodiment. The circuit arrangement comprises a central processing unit (CPU) 38, a system bus 39 (which comprises a data bus, an address bus and a control bus) for the CPU 38, a read only memory (ROM) 42 storing therein a program for the CPU 38 (and video data in a demonstration mode described below), and a random access memory (RAM) 43. The ROM 42 and the RAM 43 are connected to the system bus 39. The CPU 38 is supplied with the voltages (VX, Vy) corresponding to the input coordinates (X, Y) from the coordinate detecting section 37 via an analog-to-digital (A/D) converting section 40. If the voltages (VX, VY) correspond to coordinates (X, Y) in the picture-making area 10b of the tablet 10, the coordinates (X, Y) are written into the RAM 43. If the voltages (VX, Vy) correspond to coordinates (X, Y) in the menu selecting area 10c (see Figure 2) of the tablet 10, the CPU 38 identifies which one of the buttons 14 and 15 to 20 has been depressed on the basis of the coordinates (X, Y). Colour data or tool data corresponding to the identified button is written into the RAM 43. When the tool buttons 15 to 20 are selected, the CPU 38 will perform the operations corresponding to those tools. The CPU 38 always monitors via an input/output (I/O) interface circuit 41 whether the mechanical switches (the clear button 7 and the executing buttons 8A, 8B shown in Figure 1) are or are not operated.

The circuit arrangement shown in Figure 5 also comprises a video processor (VDP) 44 connected to the system bus 39, a video RAM (VRAM) 45 having a capacity of 2 frames (2 pages), and an NTSC (or PAL) encoder 46. The VDP 44 reads out data of the input coordinates (X, Y) and colour data from the RAM 43 on the basis of commands from the CPU 38 and writes colour video data into the VRAM 45 at a corresponding address thereof. Also, it reads out colour video data of 1 frame from the VRAM 45 periodically, and supplies same to the encoder 46. The encoder 46 converts the colour video data supplied thereto into a composite video signal CV and supplies the signal CV to a video signal output terminal 47. In this embodiment, since the VRAM 45 has a storage capacity of 2 pages, in a certain procedure (one procedure, as mentioned above, means a process carried out during a period in which the executing button 8A or 8B is operated), the VDP 44 writes and reads video data in the region of, for example, the first page. In the next procedure, after completely moving the video data of the first page into the region of the second page, the VDP 44 writes and reads video data in the region of the second page. If the CPU 38 issues a cancel command to the VDP 44 when the cancel button 20 of the tool selecting area 13 in the tablet 10 is pushed, the VDP 44 again reads the video data in the first page region of the VRAM 45, and writes the video data into the first page region when the CPU 38 is supplied with coordinate data input. This means that the picture on the picture screen 2a of the monitor 2 is returned to a picture of one procedure before by operating the cancel button 20. This results in the advantage that, when the user draws a wrong picture in the picture drawing mode, the original picture can be recovered in a one-touch fashion.

The circuit arrangement shown in Figure 5 further comprises a counter 48, an alarm circuit 49, and a speaker 50 provided for the sound emanating section 9 (see Figure 1). The counter 48 keeps counting clock pulses received from the CPU 38 on a clock input CK thereof and the count value can be cleared at any time by a clear pulse from the CPU 38. When the count value of the counter 48 reaches a value corresponding to a time of 5 minutes, that is a clear pulse has not been supplied to the counter 48 from the CPU 38 for five minutes, the counter 48 supplies an alarm signal AL to the CPU 38. During the normal drawing mode, the CPU 38 supplies an alarm operation command or signal to the alarm circuit 49 through the I/O interface circuit 41 in response to the alarm signal AL. The alarm circuit 49 comprises a timer, an oscillator, a synthesiser, a power amplifier or the like, and supplies a signal in the form of a predetermined sound, melody, or message to the speaker 50 for two minutes only in response to the alarm operation command from the CPU 38. The counter 48, alarm circuit 49 and speaker 50 are mainly provided in order to generate an alarm sound warning the user not to leave the power switch 6 in its ON state when he has finished using the apparatus.

However, in this embodiment, the alarm circuit 49 is not limited to the alarm operation; it is utilised in a normal sound emanating operation via the interface circuit 41. For example, if the user selects any of the colour selecting buttons 14 and the tool selecting buttons 15 to 20 or the like, the alarm circuit 49 is operated so that the speaker 50 emanates a predetermined touch-sound.

When the graphic computer 1 of this embodiment is used, the video signal output terminal of the computer 1 is simply coupled to the video signal input terminal of the monitor 2 via the video cable 3. When the user turns ON the power switch 6 by moving a slidable contact, the picture screen 2a of the monitor 2 displays thereon for a predetermined period of time a demonstration display which teaches the user an example of how to use the graphic computer 1. More specifically, a pen is displayed as a cursor on the picture screen 2a to draw a predetermined picture or an eraser is displayed thereon as a cursor to erase the picture, whereby the user can understand how to use the graphic computer 1.

A demonstration display program is written in the ROM 42 and includes colour data, tool data and a series of data of the input coordinates (X, Y) or the like. The CPU 38 sequentially reads these data and moves them to the RAM 43 and the VDP 44 produces video data corresponding to the data of the RAM 43, whereby a demonstration display mode is carried out as though the operator has actually drawn a locus on the tablet 10. This results in the substantial advantage that the capacity that the demonstration display program takes up in the ROM 42 can be relatively reduced.

If, during the demonstration display mode, the user operates the clear button 7 or either of the executing buttons 8A and 8B or inputs coordinates to the tablet 10 (including the menu selecting area 10c), the graphic computer 1 of this embodiment is set into the picture drawing mode, whereby the picture displayed on the picture screen 2a of the monitor 2 is completely erased and the graphic computer is set in the standby mode awaiting input from the user. After the user designates a colour by depressing a colour button 14 and a tool by depressing the fine line button 15 or the bold line button 16 with the accessory pen 11, fingertip or the like, if the user then freely draws a locus by lightly touching the picture making area 10b with the accessory pen 11 whilst the executing button 8A or 8B is depressed, a figure similar to the locus, with the designated colour and thickness, can be drawn on the picture screen 2a of the monitor 2 by the cursor 21. If the same operation is performed without depressing the executing button 8A or 8B, the cursor 21 will move (in the background of any previously drawn picture) on the picture screen 2a. Thus, the locus of the cursor 21 is not displayed as a picture until the executing button 8A or 8B is operated. Accordingly, the position of the cursor can be determined precisely when the user moves, for example, from a certain stop position in the drawing to a subsequent stop position.

If the user depresses the brush button 17 in the menu selecting area 10c, the cursor 21 is shaped as a brush and, when the user lightly touches the picture making area 10b with the accessory pen 11 or the like, the user can paint out (fill in) with a designated colour the interior of a closed figure (circle, rectangle or the like) near the locus of the brush-shaped cursor within a previously drawn picture.

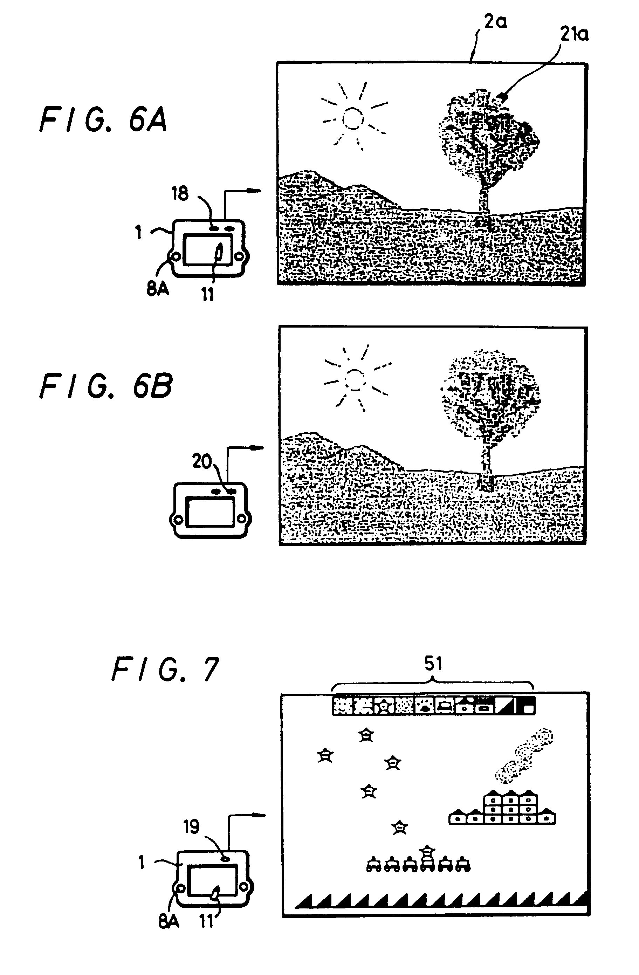

If the user depresses the eraser button 18 in the menu selecting area 10c and lightly touches the picture-making area 10b with the accessory pen 11 or the like, an eraser-shaped cursor 21a is displayed in the background of a previously drawn picture on the picture screen 2a of the monitor 2 as shown in Figure 6A and, when the user depresses the executing button 8A or 8B while moving the attachment pen 11 or the like, the previously drawn picture can be partly erased. If the picture is erased too much, the picture screen 2a can be returned to the previous picture, produced before, by depressing the cancel button 20 in the menu selecting area 10c, as shown in Figure 6B.

If the user depresses the stamp button 19 in the menu selecting area 10c, several kinds of stamp characters 51 are displayed in the upper portion of the picture screen 2a of the monitor 2 as shown in Figure 7. If the user then pushes the tablet 10 at a portion corresponding to a desired one of the stamp characters 51, that character is selected as a cursor. If the user depresses the executing button 8A or 8B while lightly touching the tablet 10 with the accessory pen 11 or the like, a desired stamp character will be displayed on the picture screen at a position of the pen designated by when the executing button 8A or 8B is depressed. (The stamp character can be superimposed upon a previously drawn picture.)

As described above, in the graphic computer 1 of this embodiment, the pressure sensitive type position sensing means 23 including the tablet 10, the CPU 38, the VDP 44, the VRAM 45, and the NTSC encoder 46 or the like are formed as one body, that is in one unit, whereby the user can make the apparatus ready to draw a picture simply by connecting the graphic computer 1 and the monitor 2 via the video cable 3. That is, the arrangement of the apparatus or system is simple and children can use the graphic computer with ease. Thus, the apparatus or system of this embodiment is eminently suitable for use by children to draw pictures.

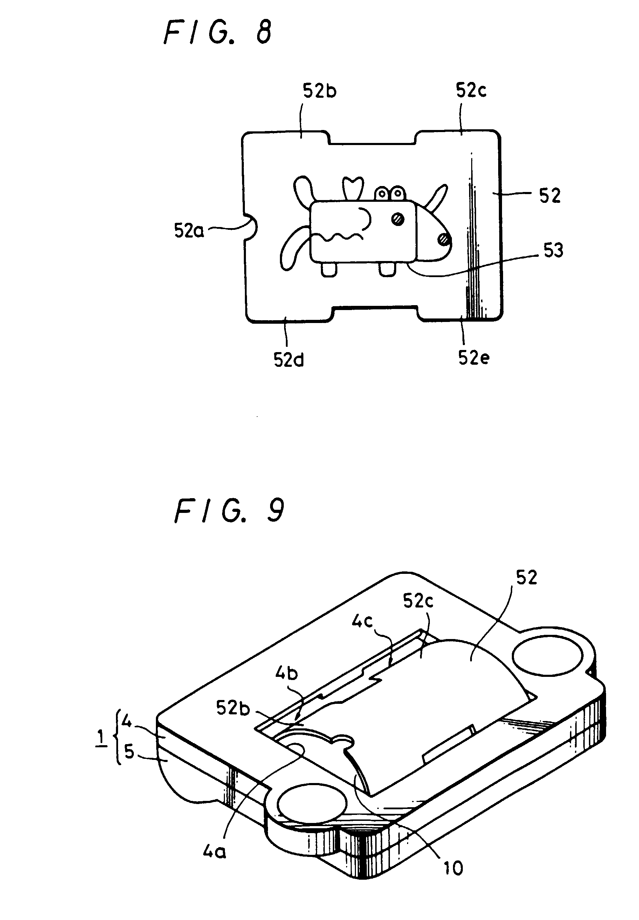

In this embodiment, a play card 52, which is a flexible sheet having a predetermined character 53 printed on one or both surfaces thereof as shown in Figure 8, can be loaded on the picture-making area 10b of the tablet 10 of the graphic computer 1. The play card 52 is substantially rectangular, and has two protruding portions (inserting portions) 52b, 52c formed on an upper side portion thereof, two protruding portions (inserting portions) 52d, 52e formed on a lower side portion thereof, and a semicircular notch 52a for ejecting the play card formed on a left side portion thereof.

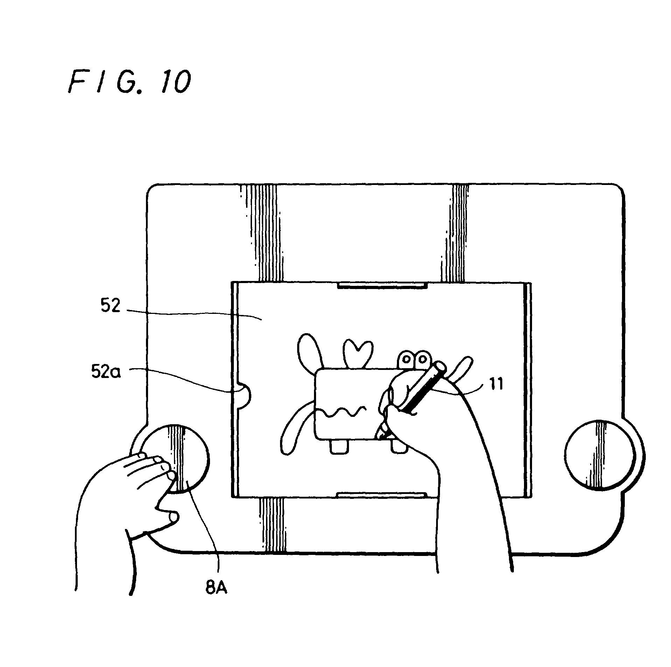

When the play card 52 is loaded on the graphic computer 1 of this embodiment, the inserting portions 52b and 52c of the upper side portion of the play card 52 are respectively inserted into the slots 4b and 4c adjacent to the tablet 10 on the upper casing 4 of the graphic computer 1, while the play card 52 is slightly deformed as shown in Figure 9. Then, the inserting portions 52d and 52e of the lower side portion of the play card 52 are respectively inserted into the slots 4d and 4e of the upper casing 4 (see Figure 1), whereby the play card 52 is stably loaded on the tablet 10 as shown in Figure 10.

The play card 52 can be used in a variety of ways, for example for tracing or playing a puzzle game or the like. If the user selects tracing, respective portions of the character 53 of the play card 52 shown in Figure 8 are marked with, for example, numerals such as 1', 2', 3', .... . In one case, the user will trace the respective portions of the character 53 in the order 1', 3', 5', 8', .... . In any other case, the user will trace the respective portions of the character 53 in the order 1', 2', 4', 7', ... so that, for example, respective different animal characters are displayed on the picture screen 2a of the monitor 2 in accordance with the order of tracing. In other words, a kind of hidden picture search play becomes possible.

In the case of playing a puzzle game, words having ciphers are printed in advance on the play card 52 and the user writes words while guessing the ciphers.

If, as described above, the play card 52 is used, the system in the example of Figure 1 can be applied, not only to picture drawing but also to sophisticated play or to a kind of learning. Since the play card 52 is provided with the inserting portions 52b to 52e while the slots 4b to 4e are formed on the portion in which the upper case 4 of the graphic computer 1 contacts the tablet 10, the play card 52 can be loaded on the graphic computer with ease. Moreover, since the play card 52 is provided with the notch 52a for ejecting the play card, the play card can be ejected from the graphic computer 1 with ease.

Instead of forming the grooves 4b to 4e on the upper casing 4, a leaf spring may be provided on an edge portion of the recess 4a of the upper casing 4 in order to fix a peripheral section of the play card 52. In that case, the play card need not be provided with the inserting portions 52b to 52e.

The operation of the counter 48 and the alarm circuit 49 in this embodiment will now be described. In the normal picture drawing mode, the counter 48 keeps counting the clock pulses from the CPU 38. Each time coordinate data (involving the menu selecting area 10c) are inputted via the tablet 10, or the clear button 7 or the executing button 8A or 8B is depressed, the CPU 38 causes the counter 48 to clear the count value. When the demonstration display is carried out after the graphic computer is powered up, the CPU 38 holds the condition of the counter 48 in which the count value of the counter 48 is cleared. In the normal picture drawing mode, if the user has neither touched the tablet 10 nor depressed any mechanical switch for five minutes, such as when the power switch 6 has inadvertently not been turned OFF (including the case in which the user has not carried out any operation for five minutes after completion of the demonstration display), the count value of the counter 48 reaches the value equivalent to five minutes so that the counter 48 supplies the alarm signal AL to the CPU 38.

Upon receiving the alarm signal AL, the CPU 38 causes the alarm circuit 49 to perform the alarm operation through the I/O interface circuit 41, whereby an alarm sound, such as predetermined sound, melody, message etc., emanates from the speaker 50 for two minutes. Thus, the user is warned that he has inadvertently left the power switch 6 in its ON state. If the power switch 6 is not turned OFF during the time period of two minutes during which the speaker 50 emanates sound, the CPU 38 holds the condition of the counter 48 in which the count value of the counter 48 is cleared.

The graphic computer 1 of this embodiment has programmed therein a demonstration mode (shop display mode) in addition to the above-described normal mode. The demonstration mode is utilised to display the apparatus shown in Figure 1 so that a customer can freely operate the apparatus in a shop window of the shop. To set the graphic computer in the demonstration mode, the slidable contact is moved to turn ON the power switch 6 while the clear button 7 is depressed. In the demonstration mode, the demonstration display begins after the graphic computer 1 is powered up. During the demonstration mode, if the user depresses the clear button 7 or the executing button 8A or 8B, or if the user inputs coordinate data via the tablet 10, the displayed picture is cleared and the graphic computer is set in the picture drawing mode, in which mode the user can draw a picture freely, similarly to the normal mode.

A program controlling the demonstration mode is so designed that, in the demonstration mode, if the user does not operate the graphic computer 1 for five minutes (until the demonstration display is ended) after the power switch is turned ON, or if the user does not operate the graphic computer for 5 minutes during the picture drawing mode after the demonstration display is ended, the picture displayed on the picture screen 2a of the monitor 2 is cleared completely and the demonstration display is started once again. More specifically, the CPU 38, supplied with the alarm signal AL from the counter 48 when the demonstration mode is set, executes the demonstration display program once again without operating the alarm circuit 48. If the user operates the graphic computer 1 during the demonstration display mode, the picture displayed on the picture screen 2a is cleared and the graphic computer is set in the drawing mode. This means that, if the graphic computer 1 is not operated at all for five minutes after the customer freely draws a picture when the system according to the example of Figure 1 is exhibited in a shop window, the picture drawn by the customer is automatically erased and the demonstration display is started once again. Therefore, according to this demonstration mode, when the graphic computer 1 is exhibited at a shop front, the salesman need not clear the picture drawn by the customer, thus making the graphic computer easy to handle.

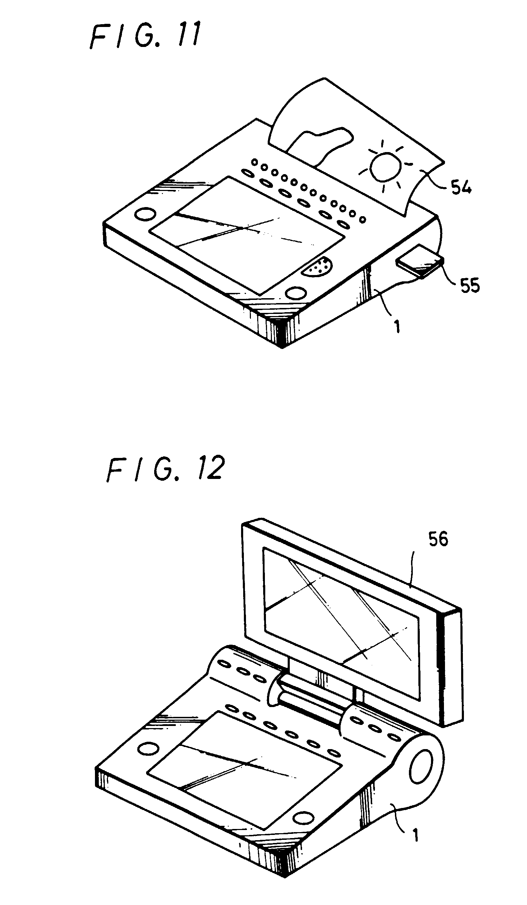

The graphic computer 1 may incorporate therein a colour or monochromatic printer (dot printer, printer-plotter, etc.) as shown in Figure 11, so that the user can print a desired picture 54 at any time. In order to complement the ROM 42 in Figure 5, an integrated circuit (IC) card in which application software is written, or a voice IC card acting as a pulse signal generator or an FM sound source, etc., may be provided in the form of an attachable/detachable card 55. Alternatively, the graphic computer 1 may incorporate therein a disc driving apparatus for a 2 inch or 3.5 inch floppy disc.

While, in the above embodiments, the graphic computer 1 and the monitor 2 are provided independently, the monitor 2 may be replaced with a liquid crystal display (LCD) 56 as shown in Figure 12. The LCD 56 may be mounted on the cabinet of the graphic computer 1 so as to be freely rotatable. If the graphic computer 1 and the LCD 56 are formed unitarily in this way, the overall arrangement can be more simplified, and the graphic computer can be used more conveniently because the coordinate input section and the image display section are located close to each other. (The LCD 56 may be replaced with an electroluminescent (EL) panel.)

While, in the above-described embodiments, the composite video signal CV of the graphic computer 1 is supplied to the monitor 2 or the like, the composite video signal CV may instead or also be directly supplied to a video tape recorder or to an electronic camera, whereby the signal may be recorded on a video tape, a floppy disc or the like.

Further, the apparatus may be so designed that a predetermined melody and/or message are emanated from the speaker 50 while the demonstration picture is displayed on the picture screen of the television monitor.

According to the embodiments of Figures 1 to 11, the constituent parts of the apparatus, except for an output device, are accommodated in the same cabinet and made unitary so that the overall arrangement of the apparatus can be miniaturised. Also, the apparatus can be made ready for use merely by connecting the video signal forming circuit (the computer) to the output device (the monitor 2) via for example, the video cable 3. Thus, children can use the graphic computer 1 with ease.

Further, since not only are the coordinates inputted by the coordinate detecting means or device 23, but also the tool selecting buttons 14 and the colour selecting buttons 15 to 20 on the tablet 10 are designated by the coordinates detecting means 23, the mechanical construction of the computer 1 can be simplified and the functions thereof can be extended.

If, according for example to Figure 12, the display device (56) is attached to the cabinet as the output device, then the overall arrangement of the apparatus can be simplified more. Also, the coordinate detecting portion and the video image display portion are provided close to each other so that the portable graphic computer apparatus can be made easier to handle.

If no data is inputted to the tablet 10 during a certain continuous period of time, or if the graphic computer apparatus is not operated at all after the demonstration display mode has ended, then the alarm sound emanates from the speaker 50 so that the user can be warned against inadvertently leaving the power switch 6 in its ON state.

Further, if a predetermined time elapses after formation of the demonstration display mode video image data is ended, or if a predetermined time elapses after a point in time at which data were last inputted to the tablet 10, the formation of the demonstration display mode video image data is started so that the user need not carry out the operation for the demonstration display mode or the like. Therefore, the portable graphic computer apparatus is suitable for exhibition at a shop front or the like for demonstration purposes.

The overall arrangement of the above-described portable graphic computer apparatus can be made compact in size and it can be utilised by children with ease. Further, since the tracing sheet or paper (if provided) is fixedly mounted on the tablet 10 and the tracing sheet can be utilised as a kind of teaching material, the advantage arises that the portable graphic computer apparatus can be made more useful.

## Claims

1. A portable graphic computer apparatus comprising:
a tablet (10) for inputting coordinates so that an operator may draw an image;
detecting means (23) for detecting coordinate data corresponding to coordinates inputted via the tablet (10);
a cabinet (4, 5) accommodating therein the tablet (10), the detecting means (23) and an image data forming means (37, 38, 40);
a demonstration program memory (42) in which a program for forming demonstration image data for a predetermined time and coordinate data defining a sequential locus of points for use in forming the demonstration image data stored, the demonstration image data simulating input of a locus of points by an operator;
the image data forming means (37, 38, 40) forming image data from either the coordinate data detected by the detecting means (23) or the coordinate data stored in the demonstration program memory;
video signal generating means (38, 44, 45, 46) for generating a video signal from said image data formed by the image data forming means (37, 38, 40); and
time detecting means (38) operative to detect a point in time at which formation of the demonstration image data is finished or a point in time at which said coordinates are last inputted to the tablet (10);
time detecting means (38, 48) operative to detect a time interval from said point in time at which formation of the demonstration image data is finished or from said point in time at which coordinates were last inputted to the tablet (10), the formation of said demonstration image data being automatically started on the basis of said time interval; and
wherein said cabinet (4, 5) also accommodates the memory (42) and the time detecting means (38, 48).

2. A portable graphic computer apparatus according to claim 1 comprising:
sound emanating means (38, 49, 50) operative to emit an alarm sound on the basis of said time interval.

3. A portable graphic computer apparatus as claimed in claim 1, comprising means for detachably mounting a tracing sheet (52) on said tablet (10).

4. A portable graphic computer apparatus as claimed in claim 3, in which the means for detachably mounting a tracing sheet comprises a leaf spring operable to retain a peripheral portion of the tracing sheet.

5. A portable graphic computer apparatus as claimed in claim 3, in which the means for detachably mounting a tracing sheet comprises slots (4b, 4c) for receiving protruding portions of the tracing sheet.

## Patentansprüche

1. Tragbares graphisches Computergerät, mit:
Einem Tablett (10) zur Eingabe von Koordinaten, so dass eine Bedienungsperson ein Bild zeichnen kann,
einer Detektoreinrichtung (23) zur Detektion von Koordinatendaten, die mit über das Tablett (10) eingegebenen Koordinaten korrespondierenden,
einem Gehäuse (4, 5), in welchem das Tablett (10), die Detektoreinrichtung (23) und eine Bilddaten-Formierungseinrichtung (37, 38, 40) untergebracht sind,
einem Demonstrationsprogrammspeicher (42), in welchem ein Programm zur Bildung von Demonstrationsbilddaten für eine vorbestimmte Zeit und von Koordinatendaten, die einen sequentiellen Ort von Punkten zur Verwendung bei der Bildung der Demonstrationsbilddaten definieren, gespeichert sind, wobei
die Demonstrationsbilddaten die Eingabe eines Ortes von Punkten durch die Bedienungsperson simulieren,
die Bilddaten-Formierungseinrichtung (37, 38, 40) Bilddaten aus entweder den durch die Detektoreinrichtung (23) detektierten Koordinatendaten oder den im Demonstrationsprogrammspeicher gespeicherten Koordinatendaten bildet,
einer Videosignal-Erzeugungseinrichtung (28, 44, 45, 46) zur Erzeugung eines Videosignals aus den von der Bilddaten-Formierungseinrichtung (37, 38, 40) gebildeten Bilddaten,
einer Zeitdetektoreinrichtung (38) zur Detektion eines Zeitpunktes, bei welchem eine Bildung der Demonstrationsbilddaten beendet ist, und/oder eines Zeitpunktes, bei welchem die Koordinaten zuletzt zum Tablett (10) eingegeben wurden,
einer Zeitdetektoreinrichtung (38, 48) zur Detektion eines Zeitintervalls von dem Zeitpunkt, bei welchem die Bildung der Demonstrationsbilddaten beendet ist, oder von dem Zeitpunkt, bei welchem Koordinaten zuletzt zum Tablett (10) eingegeben wurden, wobei die Bildung der Demonstrationsbilddaten automatisch auf der Basis des Zeitintervalls gestartet wird, wobei
im Gehäuse (4, 5) auch der Speicher (42) und die Zeitdetektoreinrichtung (38, 48) untergebracht sind.

2. Tragbares graphisches Computergerät nach Anspruch 1, mit
einer Tonabstrahleinrichtung (38, 49, 50) zum emittieren eines Alarmtons auf der Basis des Zeitintervalls.

3. Tragbares graphisches Computergerät nach Anspruch 1, mit einer Einrichtung zur abnehmbaren Befestigung eines Zeichenblatts und/oder Pauspapiers (52) auf dem Tablett.

4. Tragbares graphisches Computergerät nach Anspruch 3, wobei die Einrichtung zur abnehmbaren Befestigung eines Zeichenblatts und/oder Pauspapiers eine Blattfeder zum Halten eines peripheren Abschnitts des Zeichenblatts und/oder Pauspapiers aufweist.

5. Tragbares graphisches Computergerät nach Anspruch 3, wobei die Einrichtung zur abnehmbaren Befestigung eines Zeichenblatts und/oder Pauspapiers Schlitze (4b, 4c) zur Aufnahme vorspringender Abschnitte des Zeichenblatts und/oder Pauspapiers aufweist.

## Revendications

1. Appareil à ordinateur graphique portable comprenant :
une tablette (10) pour entrer des coordonnées de sorte qu'un opérateur puisse dessiner une image ;
des moyens de détection (23) pour détecter des données de coordonnées correspondant à des coordonnées entrées par la tablette (10) ;
un coffret (4, 5) dans lequel sont logés la tablette (10), les moyens de détection (23) et des moyens de formation de données d'image (37, 38, 40) ;
une mémoire de programme de démonstration (42) dans laquelle un programme pour former des données d'image de démonstration pendant un temps prédéterminé et des données de coordonnées définissant un lieu géométrique de points séquentiels pour la formation des données d'image de démonstration sont stockés, les données d'image de démonstration simulant l'entrée d'un lieu géométrique de points par un opérateur ;
les moyens de formation de données d'image (37, 38, 40) formant des données d'image soit à partir des données de coordonnées détectées par les moyens de détection (23), soit à partir des données de coordonnées stockées dans la mémoire de programme de démonstration ;
des moyens de génération de signaux vidéo (38, 44, 45, 46) pour engendrer un signal vidéo à partir desdites données d'image formées par les moyens de formation de données d'image (37, 38, 40) ; et,
des moyens de détection de temps (38) actifs pour détecter un point dans le temps auquel la formation des données d'image de démonstration est terminée ou un point dans le temps auquel lesdites coordonnées sont entrées en dernier dans la tablette (10) ;
des moyens de détection de temps (38, 48) actifs pour détecter un intervalle de temps à partir dudit point dans le temps auquel la formation des données d'image de démonstration est terminée ou à partir dudit point dans le temps auquel des coordonnées ont été entrées en dernier dans la tablette (10), la formation desdites données d'image de démonstration étant commencée automatiquement sur la base dudit intervalle de temps ; et ,
dans lequel ledit coffret (4, 5) loge aussi la mémoire (42) et les moyens de détection de temps (38, 48).

2. Appareil à ordinateur graphique portable selon la revendication 1, comprenant :
des moyens d'émission de son (38, 49, 50) actifs pour émettre un son d'avertissement sur la base dudit intervalle de temps.

3. Appareil à ordinateur graphique portable selon la revendication 1, comprenant des moyens pour monter une feuille à dessin (52), de façon à pouvoir la détacher, sur ladite tablette (10).

4. Appareil à ordinateur graphique portable selon la revendication 3, dans lequel les moyens pour monter une feuille à dessin, de façon à pouvoir la détacher, comprennent un ressort à lames pouvant être actionné pour retenir une partie périphérique de la feuille à dessin.

5. Appareil à ordinateur graphique portable selon la revendication 3, dans lequel les moyens pour monter une feuille à dessin, de façon à pouvoir la détacher, comprennent des fentes (4b, 4c) pour recevoir des parties saillantes de la feuille à dessin.
